# EUROPEAN PATENT SPECIFICATION

(11) **EP 4 534 961 B1**
(45) Date of publication and mention of the grant of the patent: **17.06.2026**
(21) Application number: 24202981.7
(22) Date of filing: 26.09.2024
(51) Int. Cl.: G01G 19/393

(54) **ARTICLE RETAINING APPARATUS**
ARTIKELHALTEVORRICHTUNG
APPAREIL DE RETENUE D'ARTICLE

(30) Priority: 02.10.2023 JP 2023171611
(43) Date of publication of application: 09.04.2025
(73) Proprietor: Ishida Co., Ltd., Kyoto-shi Kyoto 606-8392 (JP)
(72) Inventor: ARAKI, Koji, Ritto-shi, Shiga, 520-3026 (JP)
(74) Representative: Gill Jennings & Every LLP

(56) References cited:
- EP-A1- 3 875 923
- EP-A1- 4 137 785
- JP-B2- 6 982 923

## Description

### Technical Field

The present invention relates to an article retaining apparatus.

### Background Art

In the related art, a combination weighing apparatus having a configuration in which a booster hopper is attached to a supporting body from the upper side in the vertical direction is known.

### Citation List

### Patent Literature

Patent Literature 1: JP 6982923 B2

### Summary of Invention

However, such a combination weighing apparatus has a problem that it is difficult for an operator to visually recognize the attachment position of the booster hopper, and thus the booster hopper may fail to be correctly attached to the supporting body provided at the main body.

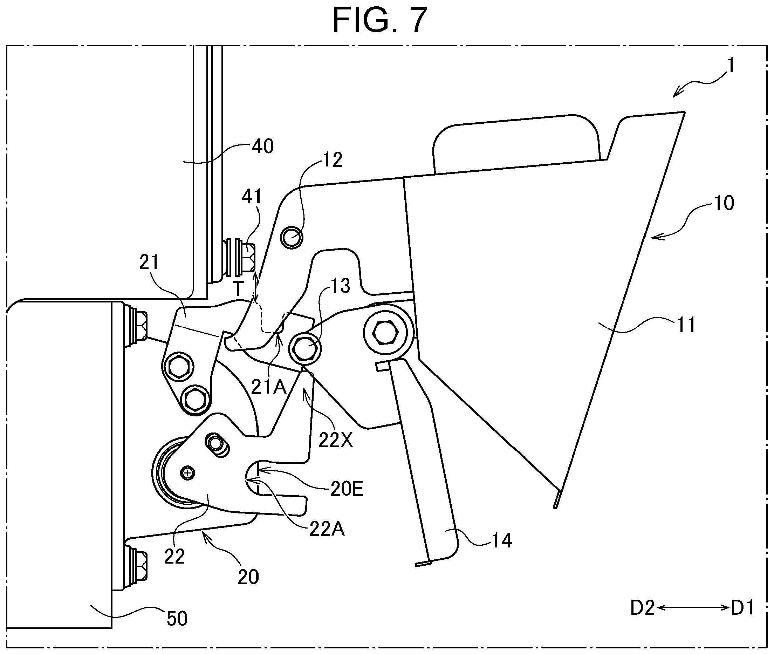

Here, a case in which a booster hopper 10 fails to be correctly attached to a supporting body 20 in such a combination weighing apparatus 1 will be described with reference to Figs. 7 to 9.

As illustrated in Fig. 7, when the operator holds the booster hopper 10, a gate 14 remains open. In this state, the operator brings the booster hopper 10 close to the supporting body 20.

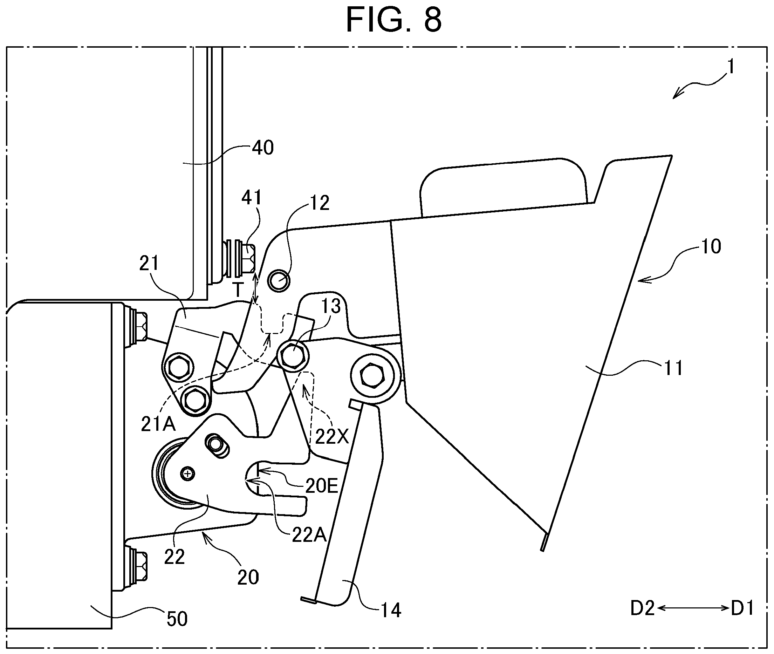

At this time, as illustrated in Figs. 7 and 8 the supporting body 20 is provided at the lower portion of the combination weighing apparatus 1. Thus, the operator brings the booster hopper 10 close to the supporting body 20 in a path from the upper side to the lower side in the substantially vertical direction.

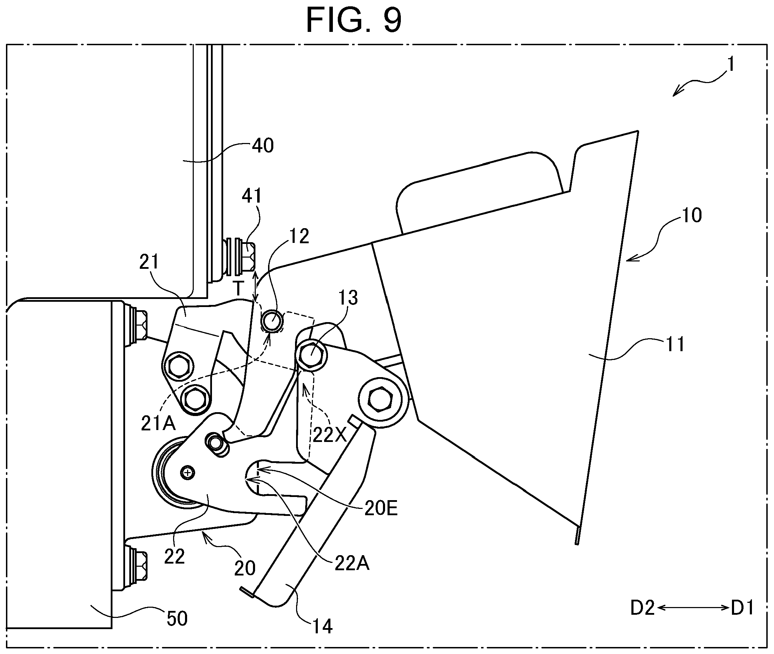

Here, as illustrated in Fig. 9, when the operator tries to attach an extending portion 12 of the booster hopper 10 to an engagement position 21A of an engaging portion 21 of the supporting body 20 in such a path, a roller 13 of the booster hopper 10 is caught by a protrusion 22X provided at a lever 22.

In this state, as illustrated in Fig. 9, the gate 14 remains open. Here, the control unit (not illustrated) of the combination weighing apparatus 1 is not configured to recognize the erroneous attachment of the booster hopper 10 as described above. Thus, the combination weighing operation is performed while an object to be weighed fails to be stored in the booster hopper 10. A skilled operator may find erroneous attachment, but an inexperienced operator may overlook erroneous attachment.

Further, when the lever 22 of the booster hopper 10 moves, the lever 22 lifts the booster hopper 10, and in the worst case, the booster hopper 10 is disengaged and falls from the supporting body 20.

The present invention has been made in view of the above problems, and an object of the present invention is to provide an article retaining apparatus that can reduce erroneous attachment of a hopper and shorten attachment time of the hopper.

An article retaining apparatus according to an embodiment is summarized as an article retaining apparatus includes: a hopper configured to temporarily retain an article and discharge the article; a supporting body configured to support the hopper in an attachable and detachable manner, and a guide, characterized in that the hopper includes: a main body configured to retain the article, and an extending portion extending along a width direction of the main body, the supporting body includes an engaging portion configured to engage with the extending portion at an engagement position, and the guide is disposed at a predetermined space with respect to an upper side of the engaging portion in a vertical direction, and when the extending portion approaches the engaging portion from the upper side in the vertical direction, the guide temporarily obstructs engagement of the extending portion and the engaging portion, and then moves the extending portion in a reverse direction of an attaching direction of the hopper to guide the extending portion to the engagement position.

According to the present invention, it is possible to provide an article retaining apparatus that can reduce erroneous attachment of a hopper and shorten attachment time of the hopper.

### Brief Description of Drawings

Fig. 1 is a diagram for describing an example of a schematic configuration of a combination weighing apparatus (article retaining apparatus) 1 according to an embodiment.
Fig. 2 is a diagram for describing an example of an operation of the combination weighing apparatus (article retaining apparatus) 1 according to the embodiment.
Fig. 3 is a diagram for describing the example of the operation of the combination weighing apparatus (article retaining apparatus) 1 according to the embodiment.
Fig. 4 is a diagram for describing the example of the operation of the combination weighing apparatus (article retaining apparatus) 1 according to the embodiment.
Fig. 5 is a diagram for describing the example of the operation of the combination weighing apparatus (article retaining apparatus) 1 according to the embodiment.
Fig. 6 is a diagram for describing the example of the operation of the combination weighing apparatus (article retaining apparatus) 1 according to the embodiment.
Fig. 7 is a diagram for describing an example of an operation of a known article retaining apparatus.
Fig. 8 is a diagram for describing the example of the operation of the known article retaining apparatus.
Fig. 9 is a diagram for describing the example of the operation of the known article retaining apparatus.

### Description of Embodiments

Hereinafter, the present embodiment will be described in detail with reference to the attached drawings. In the following description of the drawings, the same or similar parts are denoted by the same or similar reference symbols. However, note that the drawings are schematic, and ratios of dimensions are different from actual ones. Therefore, specific dimensions and the like are determined in consideration of the following description. Moreover, there may be portions where dimensional relationships or proportions are different among the drawings. In this specification and the drawings, elements having substantially the same function and configuration are denoted by the same reference numerals to omit redundant description, and elements not directly related to the present invention are omitted.

### First Embodiment

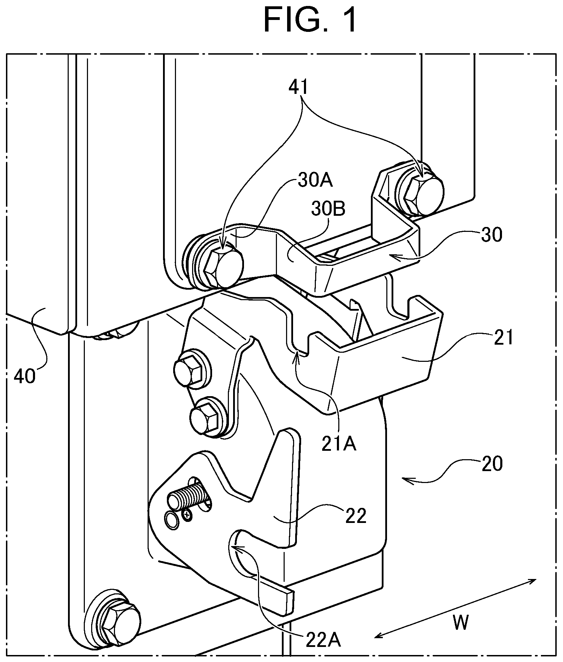

Hereinafter, an article retaining apparatus 1 according to a first embodiment of the present invention will be described with reference to Figs. 1 to 6. In the present embodiment, a combination weighing apparatus will be described as an example of the article retaining apparatus 1, but the present invention is not limited thereto. Note that the combination weighing apparatus is an apparatus that calculates an article supplied from a conveyor disposed upstream so that an article has a target weight value, and supplies the calculated article to a downstream apparatus.

As illustrated in Figs. 1 to 6, the article retaining apparatus 1 according to the present embodiment includes a hopper 10, a supporting body 20, a guide 30, a drive unit 40, and a drive unit 50. Note that the function of the drive unit 40 and the function of the drive unit 50 may be included in one drive unit.

The hopper 10 temporarily retains an article and discharges the article. For example, the hopper 10 is a booster hopper, but may be another hopper.

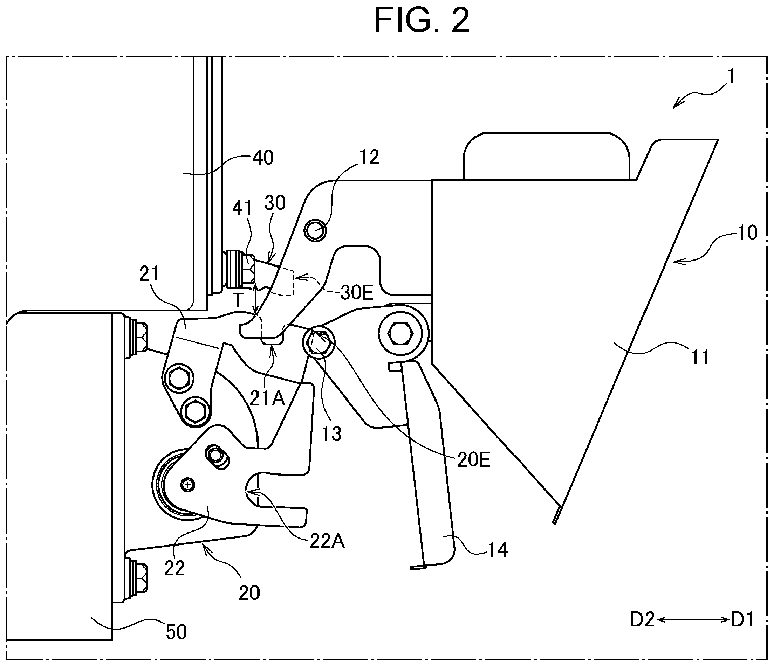

As illustrated in Figs. 2 to 6, the hopper 10 includes a main body 11 for retaining an article and an extending portion 12 extending along a width direction W (see Fig. 1) of the main body 11. In the present embodiment, the extending portion 12 is a columnar member. Note that the extending portion 12 may be a prism-shaped member other than the columnar member. In short, the sectional shape of the extending portion 12 is not limited as long as the extending portion 12 is a member that engages with an engagement position 21A.

As illustrated in Figs. 2 to 6, the supporting body 20 is provided at the drive unit 50 and supports the hopper 10 in an attachable and detachable manner. As illustrated in Figs. 1 to 6, the supporting body 20 includes an engaging portion 21 that engages with the extending portion 12 at the engagement position 21A.

As illustrated in Figs. 2 to 6, the guide 30 is disposed at a predetermined space T with respect to the upper side of the engaging portion 21 in the vertical direction. Specifically, the provided space makes it possible, at least, to insert the extending portion 12 to the engagement position 21A of the engaging portion 21.

When the extending portion 12 approaches the engaging portion 21 from the upper side in the vertical direction, the guide 30 temporarily obstructs the engagement between the extending portion 12 and the engaging portion 21. The guide 30 then moves the extending portion 12 in a reverse direction D1 of the attaching direction of the hopper 10 and guides the extending portion 12 to the engagement position 21A.

As illustrated in Figs. 1 to 6, the guide 30 may be attached by using a bolt 41 of the drive unit 40 of an upstream hopper (e.g., a weighing hopper) disposed above the hopper 10. This configuration eliminates the necessity of providing a new member for attaching the guide 30.

In the above description, the guide 30 may be welded to the drive unit 40, or the guide 30 may be formed integrally with the drive unit 40. In short, the guide 30 may have any configuration as long as the guide 30 is directly or indirectly coupled to the drive unit 40.

As illustrated in Figs. 2 to 6, the hopper 10 includes a gate 14 and a roller 13 for opening and closing the gate 14.

The drive unit 50 opens and closes the gate 14 included in the hopper 10. As illustrated in Figs. 1 to 6, the supporting body 20 includes a lever 22 that opens and closes the gate 14 by moving the roller 13.

As illustrated in Figs. 2 to 6, when the extending portion 12 is guided to the engagement position 21A, the roller 13 may slide downward in a state of being in contact with the outer side of the lever 22, and be fitted into a recess 22A provided at the lever 22.

According to such a configuration, when the extending portion 12 is engaged with the engagement position 21A, the roller 13 can also be correctly fitted into the recess 22A, and the hopper 10 can be correctly attached to the supporting body 20.

As illustrated in Figs. 2 to 6, when the drive unit 40/50 is viewed from the side, an end 30E of the guide 30 may be disposed on the reverse direction D1 side of the attaching direction of the hopper 10 with respect to an end 20E of the supporting body 20.

Such a configuration can avoid accidental fall of the hopper 10 when the extending portion 12 approaching from the upper side of the guide 30 in the vertical direction moves in the reverse direction D1 of the attaching direction of the hopper 10 by the action of the guide 30 and falls to the lower side in the vertical direction.

Specifically, when the extending portion 12 moves in the reverse direction D1 and deviates from the guide 30, the hopper 10 starts falling due to the own weight thereof. At this time, the end 20E of the supporting body 20 is disposed on the reverse direction D1 side of the attaching direction of the hopper 10 with respect to the end 30E of the guide 30, the hopper 10 is received by the fall protection surface including the end 30E of the guide 30.

As illustrated in Fig. 1, the guide 30 includes a portion 30A attached to the bolt 41 and a portion 30B rising from the portion 30A in the reverse direction D1 of the attaching direction of the hopper 10. Here, the portion 30B may have a slope shape descending toward the reverse direction D1 of the attaching direction of the hopper 10.

According to such a configuration, the area where the positioning of the hopper 10 is performed spreads over the entire area including the guide 30. When the operator tentatively places the hopper 10 on the portion 30B and loosens the holding force, the hopper 10 moves downward in the vertical direction along the slope and can be attached to the engagement position 21A by following the movement.

Hereinafter, an example of the operation of the article retaining apparatus 1 when the operator attaches the hopper 10 to the supporting body 20 will be described with reference to Figs. 2 to 6.

First, as illustrated in Fig. 2, the operator brings the hopper 10 close to the supporting body 20 in a path from the upper side to the lower side in the substantially vertical direction in a state in which the gate 14 remains open.

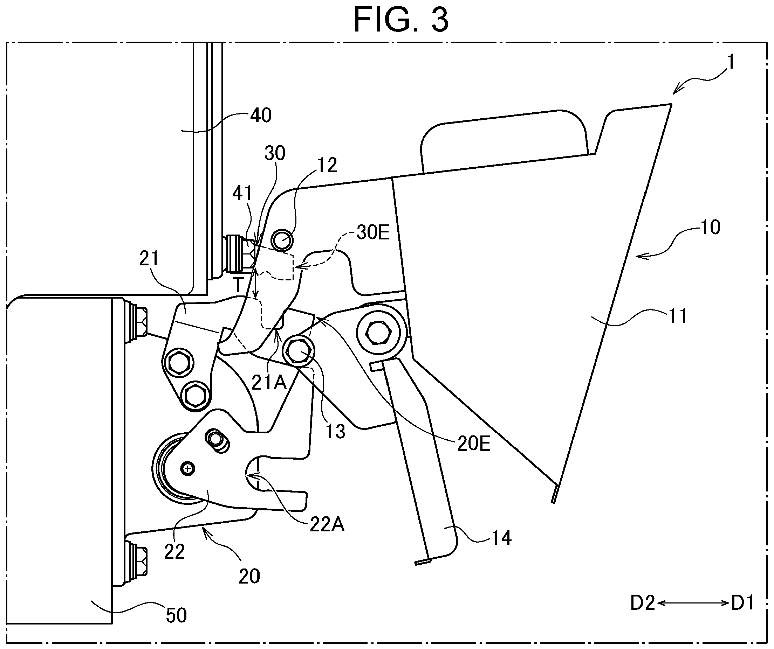

Second, as illustrated in Fig. 3, the extending portion 12 of the hopper 10 comes into contact with the guide 30 (portion 30B), and the engagement between the extending portion 12 and the engaging portion 21 is temporarily obstructed.

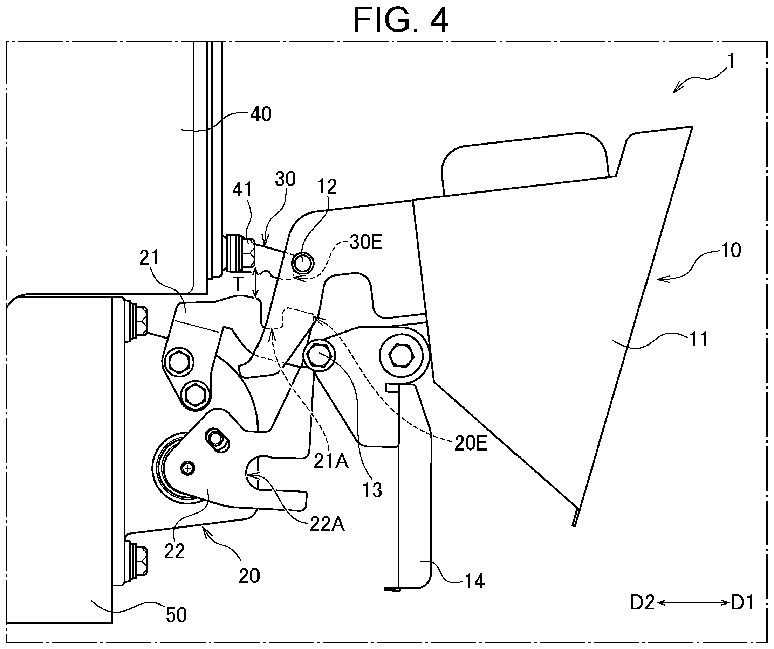

Third, as illustrated in Fig. 4, the extending portion 12 moves in the reverse direction D1 of the attaching direction of the hopper 10. At this time, the roller 13 slides downward while being in contact with the outer side of the lever 22.

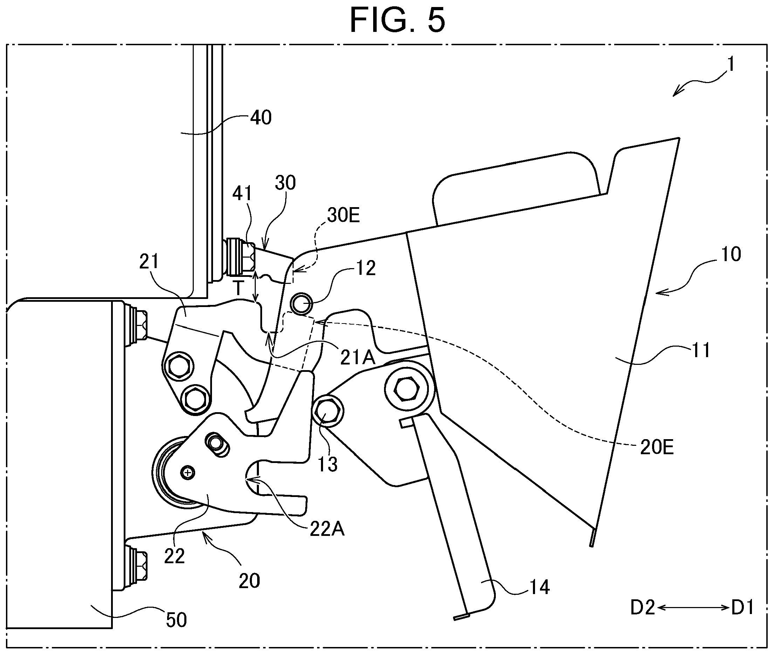

Fourth, as illustrated in Fig. 5, the extending portion 12 slides downward in the vertical direction and comes into contact with the engaging portion 21.

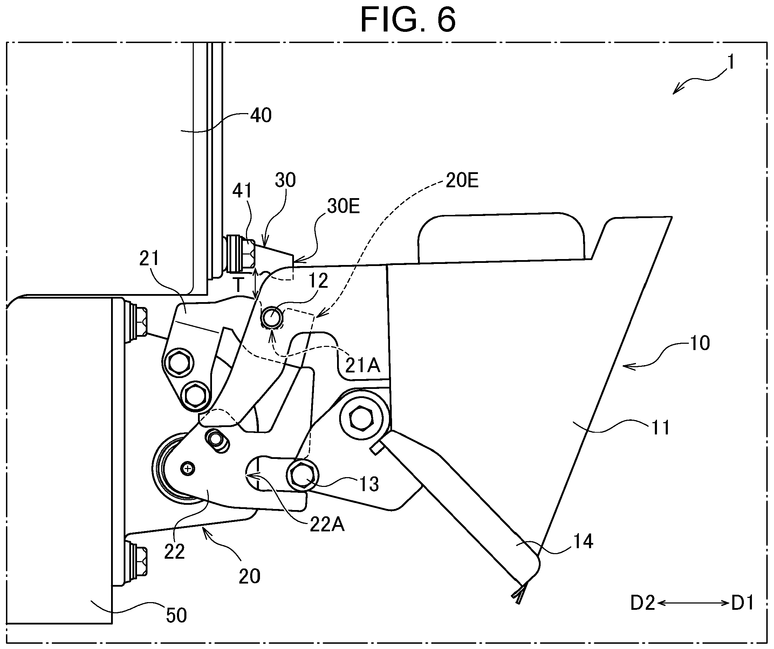

Fifth, as illustrated in Fig. 6, the operator slides the extending portion 12 in an attaching direction D2 of the hopper 10, and then the extending portion 12 is engaged with the engagement position 21A, and the roller 13 is fitted into the recess 22A provided at the lever 22.

As a result, the gate 14 is closed, and the hopper 10 is correctly attached to the supporting body 20. After this series of processes, the gate 14 opens and closes by moving the lever 22 up and down.

According to the article retaining apparatus 1 of the present embodiment, erroneous attachment of the hopper 10 can be reduced, and attachment time of the hopper 10 can be shortened.

### Reference Signs List

- 1: article retaining apparatus
- 10: hopper
- 11: main body
- 12: extending portion
- 13: roller
- 14: gate
- 20: supporting body
- 20E: end of supporting body
- 21: engaging portion
- 21A: engagement position
- 22: lever
- 22A: recess
- 30: guide
- 30E: end of guide
- 40: drive unit of upstream hopper
- 41: bolt
- 50: drive unit

## Claims

1. An article retaining apparatus (1) comprising:
a hopper (10) configured to temporarily retain an article and discharge the article;
a supporting body (20) configured to support the hopper (10) in an attachable and detachable manner, and
a guide (30), **characterized in that**
the hopper (10) includes:
a main body (11) configured to retain the article, and
an extending portion (12) extending along a width direction (W) of the main body (11),
the supporting body (20) includes an engaging portion (21) configured to engage with the extending portion (12) at an engagement position (21A), and
the guide (30) is disposed at a predetermined space (T) with respect to an upper side of the engaging portion (21) in a vertical direction, and
when the extending portion (12) approaches the engaging portion (21) from the upper side in the vertical direction, the guide (30) temporarily obstructs engagement of the extending portion (12) and the engaging portion (21), and then moves the extending portion (12) in a reverse direction (D1) of an attaching direction (D2) of the hopper (10) to guide the extending portion (12) to the engagement position (21A).

2. The article retaining apparatus (1) according to claim 1, **characterized in that**
the guide (30) is attached by using a bolt (41) of a drive unit (40) of an upstream hopper disposed above the hopper (10).

3. The article retaining apparatus (1) according to claim 2, further comprising:
a drive unit (50) configured to open and close a gate (14) included in the hopper (10), wherein
the hopper (10) includes a roller (13) configured to open and close the gate (14),
the supporting body (20) includes a lever (22) configured to open and close the gate (14) by moving the roller (13), and
when the extending portion (12) is guided to the engagement position (21A), the roller (13) slides downward in a state of being in contact with an outer side of the lever (22) and is fitted into a recess (22A) provided at the lever (22).

4. The article retaining apparatus (1) according to any of the preceding claims, **characterized in that**
an end (30E) of the guide (30) is disposed on the reverse direction (D1) side of the attaching direction (D2) of the hopper (10) with respect to an end (20E) of the supporting body (20) when the drive unit (50) is viewed from a side.

## Patentansprüche

1. Artikelhaltevorrichtung (1), die aufweist:
einen Trichter (10), der konfiguriert ist, einen Artikel vorübergehend zu halten und den Artikel abzugeben;
einen Stützkörper (20), der konfiguriert ist, den Trichter (10) in einer anbringbaren und abnehmbaren Weise zu stützen, und
eine Führung (30), **dadurch gekennzeichnet, dass**
der Trichter (10) aufweist:
einen Hauptkörper (11), der konfiguriert ist, den Artikel zu halten, und
einen Erweiterungsabschnitt (12), der sich entlang einer Breitenrichtung (W) des Hauptkörpers (11) erstreckt,
der Stützkörper (20) einen Eingriffsabschnitt (21) aufweist, der konfiguriert ist, mit dem Erweiterungsabschnitt (12) in einer Eingriffsposition (21A) in Eingriff zu treten, und
die Führung (30) in einem vorbestimmten Abstand (T) in Bezug auf eine Oberseite des Eingriffsabschnitts (21) in einer vertikalen Richtung angeordnet ist, und
wenn sich der Erweiterungsabschnitt (12) dem Eingriffsabschnitt (21) von der oberen Seite in der vertikalen Richtung nähert, die Führung (30) vorübergehend den Eingriff des Erweiterungsabschnitts (12) und des Eingriffsabschnitts (21) behindert und dann den Erweiterungsabschnitt (12) in einer umgekehrten Richtung (D1) einer Anbringungsrichtung (D2) des Trichters (10) bewegt, um den Erweiterungsabschnitt (12) in die Eingriffsposition (21A) zu führen.

2. Artikelhaltevorrichtung (1) nach Anspruch 1, **dadurch gekennzeichnet, dass** die Führung (30) unter Verwendung eines Bolzens (41) einer Antriebseinheit (40) eines stromaufwärts gelegenen Trichters befestigt wird, der über dem Trichter (10) angeordnet ist.

3. Artikelhaltevorrichtung (1) nach Anspruch 2, die ferner aufweist:
eine Antriebseinheit (50), die konfiguriert ist, ein in dem Trichter (10) vorhandenes Tor (14) zu öffnen und zu schließen, wobei
der Trichter (10) eine Rolle (13) aufweist, die konfiguriert ist, das Tor (14) zu öffnen und zu schließen,
der Stützkörper (20) einen Hebel (22) aufweist, der konfiguriert ist, das Tor (14) durch Bewegen der Rolle (13) zu öffnen und zu schließen, und
wenn der Erweiterungsabschnitt (12) in die Eingriffsposition (21A) geführt wird,
gleitet die Rolle (13) in einem Zustand, in dem sie in Kontakt mit einer Außenseite des Hebels (22) ist, nach unten und wird in eine Aussparung (22A) eingepasst,
die an dem Hebel (22) vorgesehen ist.

4. Artikelhaltevorrichtung (1) nach einem der vorhergehenden Ansprüche, **dadurch gekennzeichnet, dass**
ein Ende (30E) der Führung (30) auf der Seite der umgekehrten Richtung (D1) der Anbringungsrichtung (D2) des Trichters (10) in Bezug auf ein Ende (20E) des Stützkörpers (20) angeordnet ist, wenn die Antriebseinheit (50) von einer Seite aus betrachtet wird.

## Revendications

1. Appareil de retenue d'article (1), comprenant :
une trémie (10) configurée pour maintenir provisoirement un article, puis évacuer l'article ;
un corps de support (20) configuré pour supporter la trémie (10) de façon à pouvoir l'attacher et la détacher, et
un guide (30),
caractérisé en ce
la trémie (10) comprend :
un corps principal (11) configuré pour retenir l'article, et
une partie extensible (12) déployée dans le sens de la largeur (W) du corps principal (11),
le corps de support (20) comprenant une partie d'engagement (21) configurée pour s'engager avec la partie extensible (12) dans une position d'engagement (21A), et
le guide (30) étant disposé dans un espace prédéterminée (T) relativement à un côté supérieur de la partie d'engagement (21) dans une direction verticale, et
lorsque la partie extensible (12) s'approche de la partie d'engagement (21) depuis le côté supérieur dans la direction verticale, le guide (30) entravant provisoirement l'engagement de la partie extensible (12) et de la partie d'engagement (21), et déplace ensuite la partie extensible (12) dans le sens opposé (D1) d'une direction de fixation (D2) de la trémie (10) pour guider la partie extensible (12) vers la position d'engagement (21A).

2. Appareil de retenue d'article (1) selon la revendication 1, **caractérisé en ce que**
le guide (30) est fixé à l'aide d'un boulon (41) d'une unité motrice (40) d'une trémie en amont disposée au-dessus de la trémie (10).

3. Appareil de retenue d'article (1) selon la revendication 2, comprenant en outre :
une unité motrice (50) configurée pour ouvrir et fermer un opercule (14) compris dans la trémie (10),
la trémie (10) comprenant un rouleau (13) configuré pour ouvrir et fermer l'opercule (14),
le corps de support (20) comprenant un levier (22) configuré pour ouvrir et fermer l'opercule (14) en déplaçant le rouleau (13), et
lorsque la partie extensible (12) est guidée vers la position d'engagement (21A), le rouleau (13) coulisse vers le bas de façon à se trouver au contact d'un côté extérieur du levier (22), et est placé dans un évidement (22A) agencé dans le levier (22).

4. Appareil de retenue d'article (1) selon une quelconque des revendications précédentes, **caractérisé en ce que** :
un bout (30E) du guide (30) est disposé sur le côté de la direction opposée (D1) de la direction de fixation (D2) de la trémie (10) relativement à un bout (20E) du corps de support (20) lorsque l'unité motrice (50) est vue d'un côté.
